**Europäisches Patentamt**

**European Patent Office**

**Office européen des brevets**

(19)

(11) Veröffentlichungsnummer: **0 014 916**
**B1**

(12)

# EUROPÄISCHE PATENTSCHRIFT

(45) Veröffentlichungstag der Patentschrift: **09.03.83**

(51) Int. Cl.³: **E 06 B 5/12**, G 21 C 9/00

(21) Anmeldenummer: **80100645.3**

(22) Anmeldetag: **08.02.80**

(54) Einrichtung zur Druckentlastung von Räumen mittels Klappen.

(30) Priorität: **26.02.79 DE 2907430**

(43) Veröffentlichungstag der Anmeldung:
**03.09.80 Patentblatt 80/18**

(45) Bekanntmachung des Hinweises auf die Patenterteilung:
**09.03.83 Patentblatt 83/10**

(84) Benannte Vertragsstaaten:
**AT CH FR IT**

(56) Entgegenhaltungen:
**FR - A - 878 552**
**US - A - 2 794 276**
**US - A - 3 314 198**
**US - A - 3 953 940**

(73) Patentinhaber: **BROWN BOVERI REAKTOR GmbH**
**Dudenstrasse 44**
**D-6800 Mannheim 1 (DE)**

(72) Erfinder: **Bätz, Peter**
**Wilhelmstrasse 13**
**D-6921 Angelbachtal-Michelfeld (DE)**
Erfinder: **Gross, Siegfried Ing. grad**
**Siedlung 6**
**D-3320 Salzgitter 1 (DE)**

Courier Press, Leamington Spa, England.

# Einrichtung zur Druckenlastung von Räumen mittels Klappen

Die Erfindung betrifft eine Einrichtung zur Druckentlastung von Räumen mittels Klappen die über geneigte Drehgelenke mit den Wänden oder Decken dieser Räume verbunden sind und bei Überschreiten eines vorgegebenen Druckes nach Überwindung einer bestimmten Haltekraft Entlastungsöffnungen freigeben.

Eine derartige Einrichtung ist aus der DE-A 26 53 694 oder der FR-A-878 552 bekannt. Die darin beschriebene Ausbildung hat den Nachteil, daß die Klappen beim Aufeinandertreffen beschädigt werden. Außerdem besteht die Gefahr, daß die Klappen nach erfolgtem Ausströmen wieder in ihre Schließstellung zurückfallen. Dieses frühzeitige Schließen ist bei verschiedenen Füllstoffen des entlasteten Raumes unerwünscht.

Es ist die Aufgabe der Erfindung eine Einrichtung zur Druckentlastung von Räumen anzugeben bei deren Ansprechen eine Beschädigung von Gebäudeteilen durch die Klappen sowie der Klappen selbst ausgeschlossen ist. Außerdem sollen die Klappen nach erfolgtem Druckausgleich in Offenstellung bleiben.

Gelöst wird die Aufgabe erfindungsgemäß dadurch, daß die Klappen als Drehflügel mit jeweils einer größeren und einer kleineren Flügelfläche ausgebildet sind, deren Drehachsen in Druckentlastungsrichtung geneigt sind.

Nach einer Druckbeaufschlagung der Klappen öffnen dieselben mit ihrer größeren Fläche in Druckenlastungsrichtung und geben den Entlastungsquerschnitt frei. Bedingt durch die Neigung der Drehachsen verharren die Klappen nach Einstellung des Druckausgleiches in geöffneter Stellung.

Die Drehachsen sind dabei derart angeordnet, daß die Kraft aus der Flächendifferenz multipliziert mit dem gewünschten Öffnungsdruck größer ist als die Summe der Haltekräfte. Diese Maßnahme gewährleistet das Ansprechen der Einrichtung bei dem vorgegebenen Öffnungsdruck.

An einem Ausführungsbeispiel und den schematischen Zeichnungen der Fig. 1 bis 3 wird die erfindungsgemäße Einrichtung beschrieben.

Es zeigen:

Fig. 1 eine perspektivische Darstellung eines Raumes mit geöffneten Klappen,

Fig. 2 einen Schnitt entlang der Linie A—A der Fig. 1 mit geöffneten Klappen und

Fig. 3 einen Schnitt entlang der Linie A—A der Fig. 1 mit geschlossenen Klappen.

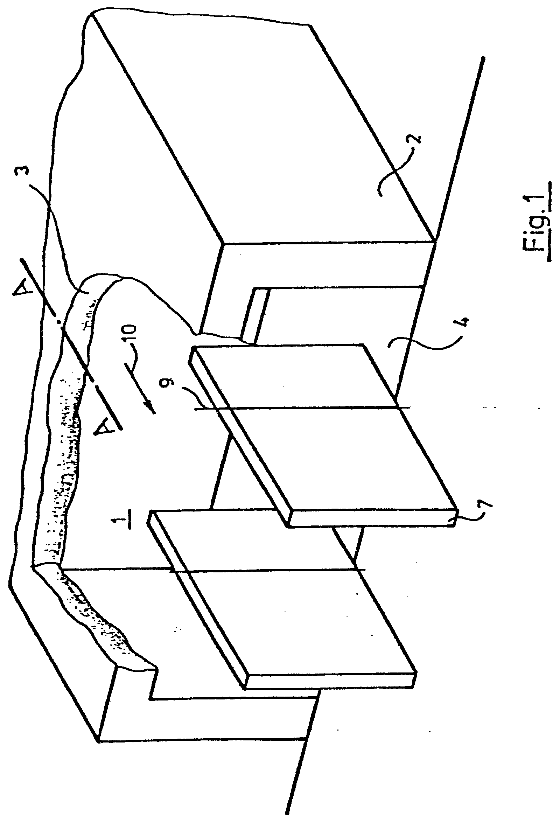

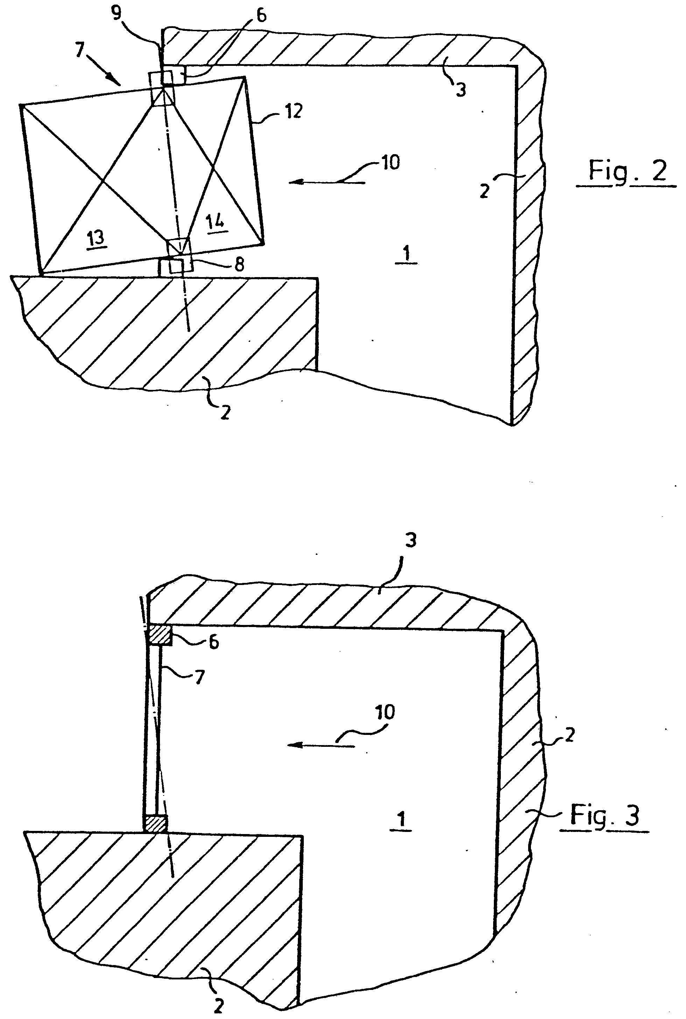

Ein Raum 1, dessen Wände 2 und Decken 3 aus Beton bestehen weist eine Entlastungsöffnung 4 auf, die mit zwei Klappen 7 verschlossen ist.

An den Wangen 6 und den Klappen 7 sind als Scharniere ausgebildete Beschläge 8 angebracht, die eine Verbindung zwischen den Wangen 6 und jeweils einer Klappe 7 herstellen.

Dabei sind die Drehachsen 9 der Beschläge 8 in Druckentlastungsrichtung 10 geneigt. Die Drehachsen 9 verlaufen dabei parallel zu den Kanten 12 einer Klappe, so daß die Klappen in ihrer Offenstellung die gleiche Neigung aufweisen wie die Drehachsen 9. Die Drehachsen sind asymetrisch zu den Klappen 7 angeordnet und unterteilen die Gesamtfläche einer Klappe in zwei verschieden große rechteckige Flächen 13, 14. Die Anordnung der Drehachsen wird so vorgenommen, daß die Kraft aus der Flächendifferenz multipliziert mit dem vorgegebenen Öffnungsdruck größer ist als die Summe der Haltekräfte wie z.B. Reibungskräfte in den Drehlagern und Klebekräfte der Dichtung. Tritt in dem Raum 1 eine unzulässige Druckerhöhung auf, so öffnen die Klappen 7 mit ihrer größeren Fläche 12 in Druckentlastungsrichtung 10 und geben die Entlastungsöffnung 4 frei. Bedingt durch die Neigung der Drehachsen 11 verharren die Klappen nach Einstellung eines Druckausgleiches in geöffneter Stellung. Die erfindungsgemäße Einrichtung kann auch mit nur einer Klappe 7 oder mit mehr als zwei Klappen betrieben werden. Wesentlich ist immer das asymetrische und geneigte Anordnen der Drehachsen 11.

Die vorgeschlagene Einrichtung schafft eine einfach aufgebaute Druckentlastung die eine Beschädigung an Gebäudeteilen bzw. Klappen ausschließt.

**Patentanspruch**

Einrichtung zur Druckentlastung von Räumen (1) mittels Klappen (7), die über geneigte Drehgelenke mit Wänden (2) oder Decken (3) dieser Räume verbunden sind und bei Überschreiten eines vorgegebenen Druckes nach Uberwindung einer bestimmten Haltekraft Entlastungsöffnungen (4) freigeben, dadurch gekennzeichnet, daß die Klappen (7) als Drehflügel mit jeweils einer größeren (13) und einer kleineren (14) Flügelfläche ausgebildet sind, deren Drehachsen (11) in Druckentlastungsrichtung (10) geneigt sind.

**Revendication**

Dispositif pour relâcher la pression de chambres (1) au moyen de volets (7) qui sont connectés par des articulations rotatives inclinées aux parois (2) ou aux plafonds (3) de ces chambres et libèrent des orifices de relâchement (4) lors du dépassement d'une pression prédéterminée et après avoir surmonté une force de maintien déterminée, caractérisé en ce que les volets (7) sont réalisés comme des vantaux rotatifs ayant respectivement une surface de vantail plus grande (13) et plus petite (14) et dont les axes de rotation (11) sont inclinés dans le sens de relâchement de pression (10).

**Claim**

A pressure relief device for rooms (1) utilizing flaps (7) connected to walls (2) or ceilings (3) by means of inclined hinges which will unblock relief openings (4) when a set pressure is being exceeded and a certain holding force overcome, characterized in that the flaps (7) are designed as revolving wings, each having one larger (13) and one smaller (14) wing surface whose turning axes (11) are inclined in the pressure relief direction (10).

Fig.1

0014916

Fig. 2

Fig. 3